Europäisches Patentamt

European Patent Office

Office européen des brevets

(19)

(11) Numéro de publication: **0 169 083**
**A1**

(12) DEMANDE DE BREVET EUROPEEN

(21) Numéro de dépôt: 85400892.7

(22) Date de dépôt: 07.05.85

(51) Int. Cl.⁴: **A 22 C 25/18**, B 26 D 7/18

(30) Priorité: 08.06.84 FR 8409013

(43) Date de publication de la demande: 22.01.86
Bulletin 86/4

(84) Etats contractants désignés: **BE DE GB IT NL SE**

(71) Demandeur: **S A E ESUN, Société dite:, 75 rue Charles le
Goffic, F-29101 Quimper (Finistère) (FR)**

(72) Inventeur: **Esun, Jacques, 75, rue Charles le Goffic,
Quimper (Finistère) (FR)**

(74) Mandataire: **Cabinet BERT, DE KERAVENANT &
HERRBURGER, 115, Boulevard Haussmann,
F-75008 Paris (FR)**

(54) Machine à découper des denrées alimentaires de grandes dimensions, notamment des thons.

(57) Machine à découper notamment des denrées alimentaires
se composant d'un tapis transporteur ainsi que d'un poste de
coupe dans lequel les denrées sont soumises à l'action dun
couteau circulaire.

Le tapis (1) est constitué par une bande sans fin (20) guidée sur une trajectoire fermée par au moins deux tambours
rotatif (4, 4') et effleurée par le couteau circulaire (3) au cours
de sa rotation, ainsi que par des tasseaux (5) mis en place sur
cette bande (20) de part et d'autre du couteau (3) et approximativement parallèlement à son axe de rotation afin de maintenir
les denrées à découper à une certaine distance au dessus du
tapis, la trajectoire du tapis (1) se subdivisant en une moitié
supérieure (I) servant à la découpe et une moitié inférieure (II)
de retour.

1

" Machine à découper des denrées alimentaires
de grandes dimensions, notamment des thons "

Le présent perfectionnement se rapporte à une machine à découper des denrées alimentaires.

Le brevet principal a pour objet de remédier aux inconvénients que l'on rencontre lors de la découpe de denrées de grandes dimensions et notamment des thons entiers qui arrivent dans les usines, telles que les conserveries, soit frais soit congelés, qui peuvent atteindre des dimensions considérables, notamment des longueurs pouvant aller jusqu'à 3 mètres et des poids d'environ 500 kg, dimensions qui rendent un pré-coupage dans le sens de la longueur puis transversalement, indispensable avant tout traitement ou manipulation ultérieure.

Afin de remédier à ces inconvénients, le brevet principal concerne une machine à découper se composant d'un tapis transporteur d'axe approximativement horizontal mobile en translation comportant un poste d'entrée des denrées non coupées, un poste de sortie des denrées découpées, ainsi qu'un poste de coupe dans lequel les denrées sont soumises à l'action d'un couteau circulaire dont le profil présente des aspérités, mobile en rotation sur un axe horizontal, perpendiculaire à l'axe du tapis, le mouvement de rotation du couteau circulaire étant commandé par un moteur électrique ou hydraulique.

Bien entendu, cette machine n'est pas limitée à la découpe des thons, mais, son utilisation peut être

2

généralisée à la découpe de n'importe quelle denrée. Bien entendu, le rayon du couteau circulaire est toujours choisi en fonction de la dimension des denrées à découper.

Il s'est avéré, par exemple, que la machine conforme au brevet principal pouvait être utilisée de manière particulièrement avantageuse pour la découpe de denrées ligneuses telles que des céleris, qu'il était, auparavant, pratiquement impossible de découper de manière automatique.

Dans de telles machines conformes au brevet principal, le tapis 1 est généralement constitué par deux bandes sans fin parallèles séparées 2 et 2' situées de part et d'autre du couteau circulaire 3 par lequel elles sont séparées, et qui sont guidées sur une trajectoire fermée par au moins deux tambours rotatifs 4 et 4'. La trajectoire du tapis 2, 2' se subdivise en une moitié supérieure I servant à la découpe proprement dite, et donc comportant les postes d'entrée et de sortie des denrées, et une moitiée inférieure de retour II.

Selon cette configuration de l'art antérieur, la partie inférieure 30 du couteau 3 passe entre les deux bandes parallèles 2 et 2' pour permettre la découpe des denrées. Or, il se trouve que ce système présente deux inconvénients graves.

En effet, les déchets de coupe représentés schématiquement par la flèche A tombent automatiquement entre les deux bandes 2 et 2' et sont projetés dans toutes les directions. Ces déchets peuvent, notamment, se déposer sur la moitié inférieure de retour II de la trajectoire des bandes 2 et 2' et être ainsi entraînés entre celle-ci et les tambours 4 et 4' sur lesquels ils s'enroulent, provoquant des surépaisseurs nuisibles à la bonne tenue des bandes 2 et 2' et rendant très difficile, sinon impossible, un nettoyage correct de la machine. Il est donc ainsi très difficile d'obtenir une hygiène satisfaisante.

0169083

**3**

D'autre part, les bandes 2 et 2' ainsi conçues, ne peuvent recevoir que des produits dont la forme permet une certaine facilité de position sur un plan horizontal. En outre, elles imposent la présence de guides latéraux pour permettre le positionnnement en travers.

L'objet du présent perfectionnement est de remédier à ces inconvénients.

A cet effet, il a pour objet une machine à découper du type décrit ci-dessus, caractérisée en ce que le tapis est constitué par une bande sans fin guidée sur une trajectoire fermée par au moins deux tambours rotatifs et effleurée par le couteau circulaire au cours de sa rotation, ainsi que par des tasseaux mis en place sur cette bande, de part et d'autre du couteau et approximativement parallèlement à son axe de rotation afin de maintenir les denrées à découper à une certaine distance au-dessus du tapis, la trajectoire du tapis se subdivisant en une moitié supérieure servant à la découpe et une moitié inférieure de retour.

Les avantages apportés par la présence des tasseaux sont multiples. En effet, non seulement ils permettent de soulever les denrées à découper au-dessus du plan du tapis pour permettre leur coupe complète, mais, en outre, ils permettent d'obtenir un positionnement correct de ces denrées par rapport à la lame du couteau dans le sens transversal, et un meilleur entraînement de ces produits en évitant tout glissement dans le sens d'avancement.

La forme des tasseaux utilisés peut, bien entendu, être quelconque en fonction du type de denrées à découper. On peut, par exemple, prévoir des tasseaux de forme parallélépipèdique, ou bien de forme trapézoïdale, de manière à définir de part et d'autre du couteau circulaire une goulotte à section en forme de V susceptible de retenir des denrées de forme arrondie.

En conséquence, conformément au présent perfectionnement, les déchets de coupe restent sur le tapis.

4

et peuvent être évacués facilement soit par simple brossage. soit à l'aide d'un jet d'eau ou d'une rampe de lavage placée sur la moitié de retour de la trajectoire de la bande, c'est-à-dire à l'endroit où le tapis est retourné sur le tambour d'entraînement situé en aval du poste de sortie des denrées découpées.

Donc, le présent perfectionnement permet d'obtenir un nettoyage permanent du tapis d'entraînement et par suite une hygiène satisfaisante.

De plus, en modifiant convenablement la forme des tasseaux, il est toujours possible de maintenir les denrées à découper de manière stable, même lorsque ces denrées sont de forme arrondie.

De plus, les denrées à découper peuvent avoir des dimensions transversales différentes de l'une à l'autre sans qu'il soit nécessaire de modifier l'écartement de guides devenus inutiles.

Les caractéristiques de la machine qui fait l'objet du présent perfectionnement seront décrites plus en détail en se référant aux dessins annexés, dans lesquels :

- les figures 1a et 1b représentent une machine conforme au brevet principal, munie d'un tapis transporteur conventionnel,

- la figure 2 est une vue longitudinale schématique de la machine objet du présent perfectionnement,

- les figures 3 et 4 sont des coupes schématiques représentant deux possibilités de forme de tasseaux.

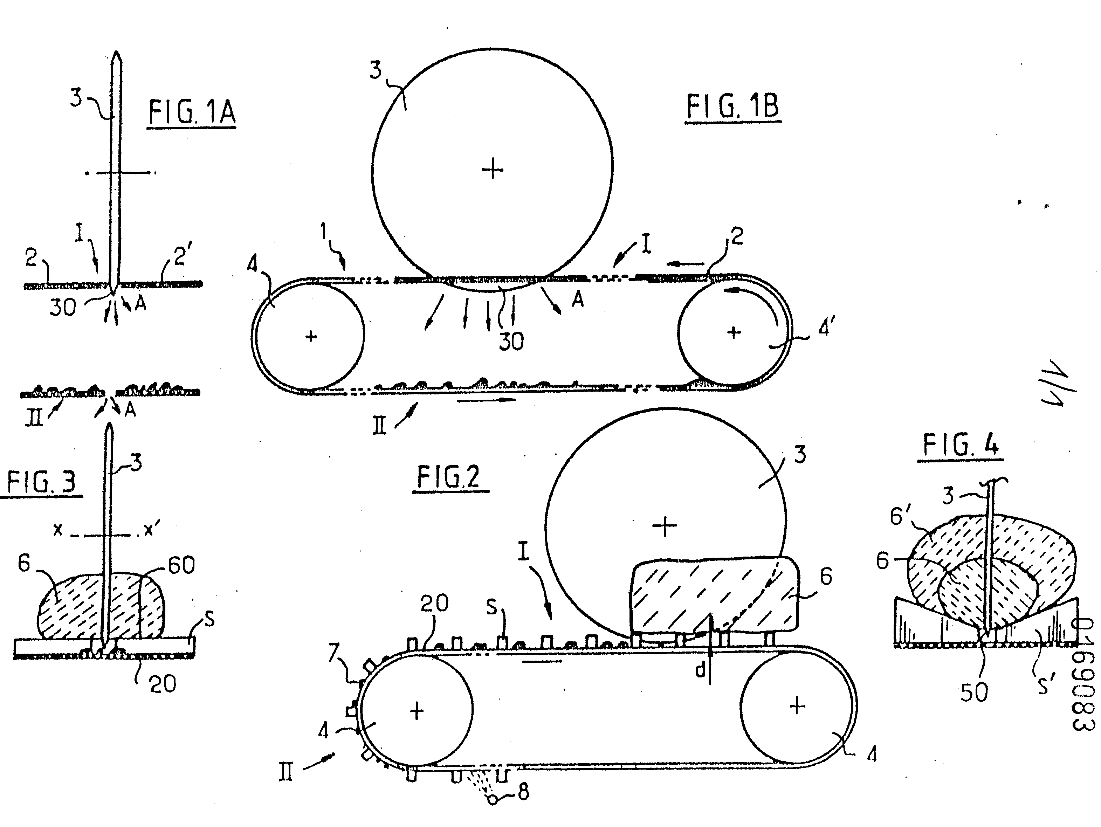

Selon les figures 2, 3 et 4. le tapis transporteur est constitué par une bande sans fin 20 guidée sur une trajectoire fermée par au moins deux tambours rotatifs 4 et 4' et effleurée par le couteau circulaire 3 au cours de sa rotation.

Cette bande sans fin 20 est munie sur sa surface. de tasseaux 5 qui sont placés de part et d'autre du couteau 3 approximativement parallèlement à son axe de

5

rotation x-x'. et ont pour objet de maintenir les denrées à découper 6 à une certaine distance d au dessus du tapis 20.

Comme dans la configuration conforme à l'art antérieur, la trajectoire du tapis 20 se subdivise en une moitié supérieure I servant à la découpe et une moitié inférieure de retour II.

Selon les figures 3 et 4, les tasseaux 5, 5' sont disposés en deux rangées parallèles situées de part et d'autre du couteau circulaire.

La configuration représentée sur la figure 3 représente l'exemple de tasseaux 5 de forme parallélépipèdique. Cette configuration est plus spécialement adaptée à la découpe de denrées 6 ayant une surface 60 plane.

La configuration représentée sur la figure 4 correspond à des tasseaux 5' de forme trapézoïdale qui défissent de part et d'autre du couteau circulaire 3, une goulotte 50 à section en forme de \. Cette configuration est adaptée tout spécialement à des denrées de forme arrondie pouvant avoir des tailles différentes.

L'avantage de la configuration conforme au présent perfectionnement est d'éviter toute possibilité de chute des déchets 7 en dehors des bandes, et de faciliter leur lavage, notamment au moyen d'une rampe de lavage 8 située dans la moitié inférieure de retour 2 de la trajectoire de la bande 20.

En conclusion, le présent perfectionnement permet d'améliorer notablement les conditions d'hygiène de la machine.

6

<u>R E V E N D I C A T I O N S</u>

1°) Machine à découper notamment des denrées alimentaires se composant d'un tapis transporteur d'axe approximativement horizontal mobile en translation comportant un poste d'entrée des denrées non coupées, un poste de sortie des denrées découpées ainsi qu'un poste de coupe dans lequel les denrées sont soumises à l'action d'un couteau circulaire dont le profil présente des aspérités, mobile en rotation autour d'un axe horizontal perpendiculaire à l'axe du tapis, le mouvement de rotation du couteau circulaire étant commandé par un moteur électrique ou hydraulique, selon le brevet principal, machine caractérisée en ce que le tapis (1) est constitué par une bande sans fin (20) guidée sur une trajectoire fermée par au moins deux tambours rotatifs (4, 4') et effleurée par le couteau circulaire (3) au cours de sa rotation, ainsi que par des tasseaux (5) mis en place sur cette bande (20), de part et d'autre du couteau (3), et approximativement parallèlement à son axe de rotation afin de maintenir les denrées à découper à une certaine distance au dessus du tapis, la trajectoire du tapis (1) se subdivisant en une moitié supérieure (I) servant à la découpe et une moitié inférieure (II de retour.

2°) Machine selon la revendication 1, caractérisée en ce que les tasseaux (5) sont disposés en deux rangées parallèles situées de part et d'autre du couteau circulaire (3).

3°) Machine selon la revendication 2, caractérisée en ce que les tasseaux (5) sont de forme parallélépipédique.

4°) Machine selon la revendication 2, caractérisée en ce que les tasseaux (5) sont de forme trapézoïdale et définissent de part et d'autre du couteau circulaire (3 une goulotte (50) à section en forme de V susceptible de retenir des denrées de forme arrondie.

7

5° Machine selon l'une quelconque des revendications 1 a 4, caractérisée en ce que la moitié inférieure 11 de retour du tapis est munie d'une rampe de lavage 18 .

ORIGINAL

FIG.1A

FIG.1B

FIG.2

FIG.3

FIG.4

0169083

Office européen
des brevets

**RAPPORT DE RECHERCHE EUROPEENNE**

Numero de la demande

EP 85 40 0892

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| P,Y | EP-A-0 120 759 (ESUN)<br>* Revendication 1 *<br>--- | 1-4 | A 22 C 25/18<br>B 26 D 7/18 |
| Y | US-A-2 140 575 (DAVID)<br>* Page 1, colonne de droite, ligne 43 - page 2, colonne de gauche, ligne 4 *<br>----- | 1-4 | |

DOMAINES TECHNIQUES
RECHERCHES (Int. Cl.4)

A 22 C
B 26 D

Le présent rapport de recherche a été établi pour toutes les revendications

| Lieu de la recherche<br>LA HAYE | Date d'achèvement de la recherche<br>09-09-1985 | Examinateur<br>DE LAMEILLIEURE D. |
|---|---|---|